# FASCICULE DE BREVET EUROPEEN

(11) **EP 1 097 909 B1**
(45) Date de publication et mention de la délivrance du brevet: **09.08.2006**
(21) Numéro de dépôt: 00470017.5
(22) Date de dépôt: 03.10.2000
(51) Int. Cl.: C02F 11/18, C02F 11/14

(54) **Procédé de traitement des boues ou sols contaminés par traitement à la chaux vive au moyens d'une installation mobile**
Verfahren zur Aufbereitung von Schlämmen oder Erde unter Anwendung von Branntkalk mit einer Mobilen Anlage
Process for treating sludges or soils using quicklime with a mobile system

(30) Priorité: 05.11.1999 FR 9914084
(43) Date de publication de la demande: 09.05.2001
(73) Titulaire: Traitement Valorisation Decontamination, 54180 Heillecourt (FR)
(72) Inventeur: Lionnet, Michel, 54260 Longuyon (FR); Chemin, Jean-Louis, 94230 Cachan (FR); Renat, Jean-Christophe, 54000 Nancy (FR)
(74) Mandataire: Poupon, Michel

(56) Documents cités:
- US-A- 4 487 507
- PATENT ABSTRACTS OF JAPAN vol. 1999, no. 10, 31 août 1999 (1999-08-31) & JP 11 140904 A (OSAKA GAS CO LTD;NAKAMICHI KIKAI SANGYO KK; NITTETSU MINING CO LTD), 25 mai 1999 (1999-05-25)

## Description

La présente invention a pour objet un procédé de traitement des boues ou sols contaminés en vue de l'éradication des légionnelles, des amibes, des bactéries et/ou d'autres pathogènes du type dans laquelle on soumet le produit à traiter à l'action de chaux vive.

Il est déjà connu de traiter des boues par de la chaux afin d'éliminer des germes pathogènes. Les boues ainsi traitées peuvent être réutilisées pour épandage des sols.

Les dispositifs proposés pour mettre en oeuvre ce procédé sont de conception complexe et plus particulièrement destinés à des installations fixes.

Il est également connu de traiter des boues par adjonction de chaux, selon le procédé décrit et revendiqué par le brevet EP - A - 0524245.

Le procédé décrit dans ce brevet impose de soumettre la boue, à laquelle on a déjà mélangé de la chaux, à un apport de chaleur supplémentaire.

Le besoin existe donc de dispositifs simples permettant le chaulage efficace de boues afin d'en éliminer les différents germes pathogènes, le dispositif étant mobile donc utilisable séquentiellement à plusieurs endroits par des utilisateurs multiples L'état de la technique mentionne le document - Patent Abstract of JAPON - Vol. 1999, n° 10 (1999-08-01) et JP 11 140 09 04 A.

Celui-ci décrit un dispositif de fonctionnement en continu et convient pour un traitement court pouvant amender le sol (small recycle treatment) mais ne résout pas le problème de l'éradiction des bactéries.

L'état de la technique mentionne également le document US-A-4,487,507.

Celui-ci conceme un dispositif de traitement des produits liquides destinés à être solidifiés ou, pour le moins, densifiés dans le malaxeur par adjonction d'un produit adéquat. Un tel dispositif fonctionne en continu.

Les inconvénients de l'art antérieur et les problèmes de l'adaptation du procédé en batch ont été résolus par l'invention qui consiste en un procédé de traitement des boues ou sols contaminés en vue de l'éradication des légionnelles, des amibes, des bactéries et/ou d'autres pathogènes du type dans lesquelles on soumet le produit à traiter à un traitement physico-chimique par de la chaux vive,
caractérisée en ce qu'il se déroule dans une installation mobile constituée essentiellement de :
- une trémie peseuse de stockage et d'alimentation en chaux ;
- un extracteur à bande transporteuse reprenant la chaux alimentée en sortie de ladite trémie pour l'amener vers et dans un malaxeur ;
- une bascule à boue recevant une quantité donnée de boue à traiter en vue d'alimenter celle-ci vers ledit malaxeur ;
- un malaxeur recevant la boue à traiter et la chaux,
- une goulotte d'extraction des boues traitées hors des malaxeurs en fin de cycle de traitement,
et caractérisé en ce que les boues à traiter sont amenées de manière séquentielle dans ladite bascule à boue,
et caractérisé en ce que le malaxeur reçoit la quantité de chaux adaptée à la siccité de la boue qu'il reçoit.

On comprendra mieux invention à l'aide de la description faite ci-après d'un mode de mise en oeuvre, donné à titre d'exemple non limitatif, en référence au schéma unique annexé qui est une vue en élévation latérale d'une installation conforme à l'invention.

L'installation utilisée dans le procédé de l'invention, généralement référencée (1), est de manière générale disposée sur un châssis (2) la rendant mobile, ledit châssis pouvant être relié à et tracté par un tracteur (3). Pour surveiller le fonctionnement du dispositif et assurer les différentes opérations manuelles et visuelles successives, on y adjoindra une passerelle extérieure déplaçable (4).

L'installation conforme à l'invention comporte essentiellement :
- une trémie peseuse (5) de stockage et d'alimentation en chaux
- un extracteur (6) à bande transporteuse,
- une bascule à boues (7)
- un malaxeur (8),
- une goulotte (11) d'extraction des boues traitées.

On décrira ci-après chaque poste de l'installation, utilisée.

La trémie peseuse (5) est destinée à recevoir la chaux vive servant au traitement des boues.

Elle aura par exemple un volume de 2m3 et sera munie d'un couvercle relevable articulé. Elle comportera une grille de protection sur le haut de l'ouverture. La trémie sera en outre équipée d'un vibreur à quatre balourds, en lui même connu, pour éviter tout colmatage.

La trémie (5) est destinée à recevoir la chaux permettant en aval le traitement des boues.

La chaux utilisée préférentiellement aura les caractéristiques suivantes :
- granulométrie de 1/50 mm, principalement type 5/17-5/22,
- chaux vive magnésienne à ± 20 % MgO,
- température du cuisson moyenne : ± 700° C,
- elle comporte d'éventuels additifs chimiques en eux-mêmes connus

En sortie de trémie (5), la chaux tombe sur l'extracteur à bande lisse, entraîné classiquement par un moteur (9).

La quantité de chaux amenée est approximativement de 15 à 35 % en poids de la boue à traiter, en fonction de la siccité de celle-ci.

En bout de bande transporteuse, la chaux est alimentée au travers d'une goulotte (10) dans le malaxeur (8).

Les boues à traiter sont amenées de manière séquentielle dans une bascule à boues (7).

Les boues reçues dans la bascule auront les caractéristiques suivantes :
- siccité de 0 à 100 %, de préférence et habituellement de 5 à 20 %
- homogénéisation par pré-traitement,
- granulométrie de 50 µm à 20 mm

Le malaxeur reçoit les boues à traiter et la quantité adéquate de chaux.

Les caractéristiques du traitement physico-chimique opéré sont les suivantes, pour un fonctionnement en batch :
- température de réaction comprise entre 70°C et 110°C sans apport de chaleur, l'augmentation de chaleur étant due à la seule exothermie de la réaction ;
- temps de réaction exothermique :

- de 2' à 1 h 30 et plus pour des températures voisines de 70°C,
- de 2' à 15' ou plus pour des températures voisines de 110°C,
- temps de malaxage : de 5 à 10 minutes ;

Après le traitement dans le malaxeur la maturation se fait soit en andains, soit en containers, après reprise du produit traité en sortie de malaxeur.

Pour l'éradication des légionnelles, la maturation requise est supérieure à 1 h à des températures supérieures à 70°C.

Pour l'éradication des amibes, la maturation requise est supérieure à 15' à des températures supérieures à 95°C.

Les boues traitées évacuées par la goulotte (11) ont les caractéristiques suivantes :
- absence de légionnelles, d'amibes, de bactéries et autres pathogènes,
- siccité supérieure à 35 %
- les métaux lourds sont hydroxylés, puis carbonatés, donc fixés sous forme insoluble,
- l'arsenic et les cyanures sont neutralisés,
- elles peuvent être mises telles quelles en décharges classiques de classe 2 ou 3 selon les normes en vigueur.

Les avantages du procédé selon l'invention sont les suivants :
- cycle rapide
- aucun rejet aqueux (il n'y a pas de filtrat)
- pas de chauffage préalable des boues
- unité mobile totalement autonome

Bien entendu le châssis sur lequel est disposée l'installation sera muni des périphériques électriques et informatiques classiques à savoir tableau de commande, de mesure, de contrôle ainsi que de passerelles d'accès et de circulation.

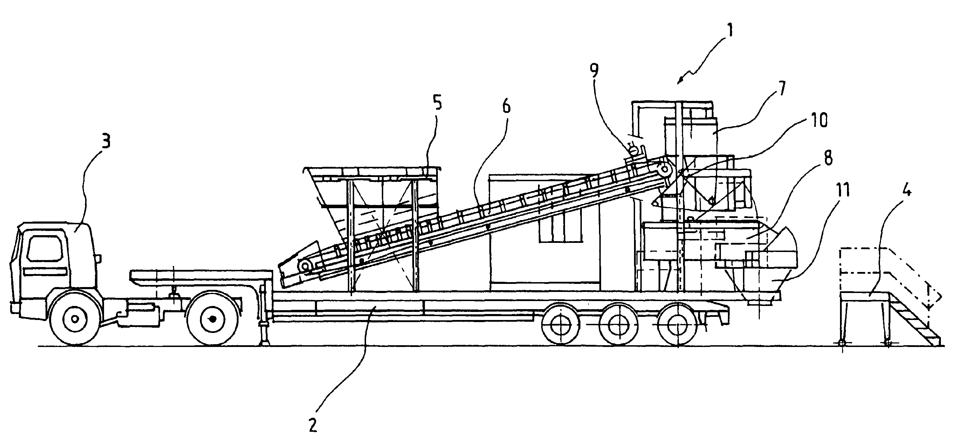

## Revendications

1. Procédé de traitement des boues ou sols contaminés en vue de l'éradication des légionnelles, des amibes, des bactéries et/ou d'autres pathogènes du type dans lesquelles on soumet le produit à traiter à un traitement physico-chimique par de la chaux vive,
**caractérisée en ce qu'**il se déroule dans une installation mobile constituée essentiellement de :
- une trémie peseuse (5) de stockage et d'alimentation en chaux ;
- un extracteur (6) à bande transporteuse reprenant la chaux alimentée en sortie de ladite trémie pour l'amener vers et dans un malaxeur (8);
- une bascule à boue (7) recevant une quantité donnée de boue à traiter en vue d'alimenter celle-ci vers ledit malaxeur (8);
- un malaxeur (8) recevant la boue à traiter et la chaux,
- une goulotte (11) d'extraction des boues traitées hors des malaxeurs (8) en fin de cycle de traitement,
et **caractérisé en ce que** les boues à traiter sont amenées de manière séquentielle dans ladite bascule à boue (7),
et **caractérisé en ce que** le malaxeur reçoit la quantité de chaux adaptée à la siccité de la boue qu'il reçoit.

2. Procédé pour la mise en oeuvre de l'installation selon la revendication 1, **caractérisé en ce que** l'on utilise de la chaux ayant les caractéristiques suivantes :
- granulométrie de 1/50 mm, principalement type 5/17-5/22,
- chaux vive magnésienne à ± 20 % MgO,
- température du cuisson moyenne : ± 700° C.

3. Procédé selon l'une des revendications 1 à 2 **caractérisé en ce que** les boues à traiter sont amenées de manière séquentielle dans une bascule à boues (7) ont les caractéristiques suivantes :
- siccité de 0 à 100 %, de préférence et habituellement de 5 à 20 %
- homogénéisation par pré-traitement,
- granulométrie de 50 µm à 20 mm

4. Procédé selon l'une des revendications 1 à 3 **caractérisé en ce que** les caractéristiques du traitement physico-chimique opéré sont les suivantes, pour un fonctionnement en batch :
- température de réaction comprise entre 70°C et 110°C sans apport de chaleur, l'augmentation de chaleur étant due à la seule exothermie de la réaction ;
- temps de réaction exothermique :
- de 2' à 1 h 30 et plus pour des températures voisines de 70°C,
- de 2' à 15' ou plus pour des températures voisines de 110°C,
- temps de malaxage : de 5 à 10 minutes.

## Claims

1. Method of treating contaminated sludges or soils with a view to removing legionnellae, amoebae, bacteria and/or other pathogens of the type in which the product to be treated is subjected to a physico-chemical treatment by quicklime, **characterised in that** it takes place in a mobile installation substantially made up of:
- a weighing hopper (5) for storing and supplying lime;
- an extractor (6) with a conveyor belt which collects the supplied lime from the outlet of said hopper to convey it to and into a mixer (8);
- a sludge rocker (7) which receives a given quantity of sludge to be treated with a view to supplying said sludge to said mixer (8);
- a mixer (8) which receives the sludge to be treated and the lime; and
- a spout (11) for extracting the treated sludges from the mixers (8) at the end of the treatment cycle,
and **characterised in that** the sludges to be treated are introduced in a sequential manner into said sludge rocker (7), and **characterised in that** the mixer receives the quantity of lime suited to the siccity of the sludge which it receives.

2. Method for operating the installation according to claim 1, **characterised in that** lime having the following characteristics is used:
- granulometry of 1/50 mm, principally of the type 5/17-5/22;
- magnesium quicklime at ± 20 % MgO; and
- mean baking temperature: ± 700° C.

3. Method according to one of claims 1 to 2, **characterised in that** the sludges to be treated are introduced in a sequential manner into a sludge rocker (7) and have the following characteristics:
- siccity of between 0 and 100 %, preferably and usually between 5 and 20 %;
- homogenisation by pretreatment; and
- granulometry of between 50 µm and 20 mm.

4. Method according to one of claims 1 to 3, **characterised in that** the characteristics of the physico-chemical treatment carried out are the following, for a batch operation:
- reaction temperature of between 70° C and 110° C without the application of heat, the increase in heat being due solely to the exothermy of the reaction;
- time of the exothermic reaction:
- between 2' and 1 h 30 and more for temperatures in the vicinity of 70° C; and
- between 2' and 15' or more for temperatures in the vicinity of 110° C; and
- mixing time: between 5 and 10 minutes.

## Patentansprüche

1. Verfahren zur Behandlung der kontaminierten Schlämme oder Böden zur Ausrottung der Legionellen, der Amiben, der Bakterien und/oder anderen pathogenen Stoffe, bei dem das zu behandelnde Produkt einer physikalisch-chemischen Behandlung durch Ätzkalk unterzogen wird,
**dadurch gekennzeichnet, dass** es in einer beweglichen Anlage durchgeführt wird, im Wesentlichen bestehend aus:
- einem Wägetrichter (5) zur Lagerung und Versorgung mit Kalk;
- einer Entnahmevorrichtung (6) mit Förderband, die den am Ausgang des Trichters zugeführten Kalk aufnimmt, um ihn zu und in einen Mischer (8) zu leiten;
- einer Schlammwaage (7), die eine gegebene Menge an zu behandelndem Schlamm aufnimmt, um diesen zu dem Mischer (8) zu leiten;
- einen Mischer (8), der den zu behandelnden Schlamm und den Kalk aufnimmt,
- eine Rinne (11) zur Entnahme der behandelten Schlämme aus den Mischern (8) am Ende des Behandlugnszyklus,
und **dadurch gekennzeichnet, dass** die zu behandelnden Schlämme sequentiell in die Schlammwaage (7) geleitet werden,
und **dadurch gekennzeichnet, dass** der Mischer die Kalkmenge aufnimmt, die an die Trockenheit des Schlammes, die er aufnimmt, angepasst ist.

2. Verfahren für den Einsatz der Anlage nach Anspruch 1, **dadurch gekennzeichnet, dass** Kalk mit folgenden Eigenschaften verwendet wird:
- Granulometrie 1/50 mm, hauptsächlich vom Typ 5/17-5/22
- Magnesium-Ätzkalk zu ± 20 % MgO,
- durchschnittliche Siedetemperatur: ± 700 °C.

3. Verfahren nach einem der Ansprüche 1 bis 2, **dadurch gekennzeichnet, dass** die zu behandelnden Schlämme sequentiell in eine Schlammwaage (7) geleitet werden und die folgenden Eigenschaften aufweisen:
- Trockenheit von 0 bis 100 %, vorzugsweise und üblicherweise 5 bis 20 %
- Homogenisierung durch Vorbehandlung,
- Granulometrie 50 µm bis 20 mm.

4. Verfahren nach einem der Ansprüche 1 bis 3, **dadurch gekennzeichnet, dass** die Merkmale der durchgeführten physikalisch-chemischen Behandlung bei einer Batch-Funktion folgende sind:
- Reaktionstemperatur zwischen 70 °C und 110 °C ohne Wärmezufuhr, wobei die Erhöhung der Wärme nur auf die Exothermie der Reaktion zurückgeht;
- exotherme Reaktionszeit:
- 2' bis 1 h 30 und mehr bei Temperaturen nahe 70 °C
- 2' bis 15' oder mehr bei Temperaturen nahe 110 °C
- Mischzeit: 5 bis 10 Minuten.
